(19) Europäisches Patentamt
European Patent Office
Office européen des brevets

(11) **EP 4 095 577 A1**

(12) **EUROPEAN PATENT APPLICATION**

(43) Date of publication:
**30.11.2022 Bulletin 2022/48**

(21) Application number: **21208795.1**

(22) Date of filing: **17.11.2021**

(51) International Patent Classification (IPC):
**G02B 6/44** (2006.01)

(52) Cooperative Patent Classification (CPC):
**G02B 6/4433;** G02B 6/4403; G02B 6/4438

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2021 US 202163192444 P**
**05.10.2021 US 202117494104**

(71) Applicant: **OFS Fitel, LLC**
**(a Delaware Limited Liability Company)**
**Norcross, Georgia 30071 (US)**

(72) Inventors:
• **TOLAND, Henson P.**
**Atlanta, GA 30307 (US)**
• **WEIMANN, Peter A.**
**Atlanta, GA 30306 (US)**

(74) Representative: **Stöckeler, Ferdinand et al**
**Schoppe, Zimmermann, Stöckeler Zinkler, Schenk & Partner mbB Patentanwälte**
**Radlkoferstrasse 2**
**81373 München (DE)**

(54) **OPTICAL CABLE WITH HIGH ASPECT RATIO STRENGTH RODS**

(57)    An optical fiber cable may include a cable jacket, a central tube within the cable jacket, optical fibers within the central tube, and a number of semi-rigid rods around the central tube. Each rod may have a cross-sectional shape with an aspect ratio of at least 2:1. The rods may be helically applied around the central tube.

**FIG. 2**

EP 4 095 577 A1

**Description**

CROSS-REFERENCE TO RELATED APPLICATION

The benefit of U.S. Provisional Patent Application No. 63/192,444, filed May 24, 2021, entitled "Cable for air blown applications using rollable ribbon units and rectangular fiber-reinforced plastic (FRP) rods," is hereby claimed and the disclosure thereof incorporated herein in its entirety by this reference.

BACKGROUND

An optical fiber cable comprises two or more optical fibers enclosed within a jacket. The fibers may be in the form of ribbons in which the individual fibers are bound together with an adhesive, commonly referred to as a matrix material. In so-called "rollable" or partially-bonded ribbons, patches of adhesive are distributed intermittently along the fibers to enable the fibers to assume a compact shape, thereby promoting high fiber packing density in the cable.

An optical fiber cable may include various strength components that facilitate its installation. For example, a cable may include a semi-rigid rod or similar strength member in the center of the cable that enables the cable to withstand installation loads. In a so-called "loose tube" configuration, the fibers (e.g., rollable ribbons) may be grouped within multiple buffer tubes surrounding the central strength member. In another configuration, commonly referred to as "central core," the fibers (e.g., rollable ribbons) are centered in the cable (e.g., in a core tube). In a central core configuration, semi-rigid strength members may be positioned alongside the core, i.e., running linearly along the length of the cable. Such strength members may be positioned on opposite sides of the core tube, i.e., 180 degrees apart. It is also known to helically strand strength members around the core tube of a central core cable, which allows a lower minimum cable bend radius than linearly positioned strength members. Central core cables are generally able to achieve higher fiber packing density than loose tube cables.

In an installation method known as blowing or jetting, compressed air is used to reduce friction between the cable jacket and the duct wall, thereby enabling the cable to be inserted more easily. Very small diameter cables (e.g., on the order of 10-20 mm), sometimes referred to as "microcables," may be installed in correspondingly small ducts by blowing. It would be desirable to provide small-diameter cables having high fiber packing density that are conducive to blown installation.

SUMMARY

Embodiments of the invention relate to optical fiber cables having rods around a central tube. In an exemplary embodiment, an optical fiber cable may include a cable jacket, a central tube within the cable jacket, a plurality of optical fibers within the central tube, and a plurality of semi-rigid rods around the central tube. Each rod has a cross-sectional shape with an aspect ratio of at least 2:1, i.e., a width at least twice the height. Nevertheless, other cables, methods, features, and advantages will be or become apparent to one of skill in the art upon examination of the following figures and detailed description. It is intended that all such additional systems, methods, features, and advantages be included within this description, be within the scope of the specification, and be protected by the accompanying claims.

BRIEF DESCRIPTION OF THE DRAWINGS

The invention can be better understood with reference to the following drawings. The components in the drawings are not necessarily to scale, emphasis instead being placed upon clearly illustrating the principles of the present invention.

FIG. 1 is a perspective view of an optical fiber cable, in accordance with exemplary embodiments of the invention.
FIG. 2 is a cross-sectional view of the optical fiber cable of FIG. 1, in accordance with exemplary embodiments of the invention.
FIG. 3A is a cross-sectional view of a rod of the optical fiber cable of FIGs. 1-2, in accordance with exemplary embodiments of the invention.
FIG. 3B is similar to FIG. 3A, showing another example of a rod.
FIG. 3C is similar to FIGs. 3A-3B, showing yet another example of a rod.
FIG. 4 is top plan view of a rollable ribbon, in accordance with exemplary embodiments of the invention.
FIG. 5 is a sectional view of the rollable ribbon of FIG. 4.
FIG. 6 is a table of examples of cables, in accordance with exemplary embodiments of the invention.

DETAILED DESCRIPTION

Although central core cables can provide high fiber packing density, linearly positioned semi-rigid strength members in a central core cable, i.e., where the strength members run parallel to the cable longitudinal axis, tend to generate a preferential bending plane that may inhibit blowing performance. As described below, a number of semi-rigid, high aspect ratio strength members distributed evenly around a central tube may provide sufficient rigidity for blown installation without increasing the cable diameter.

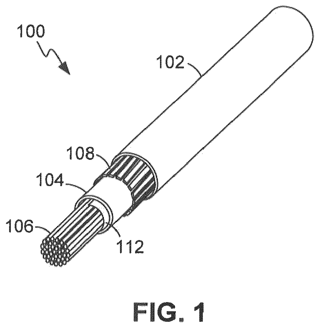

As illustrated in FIGs. 1-2 (not to scale), in an illustrative or exemplary embodiment of the invention, an optical fiber cable 100 may comprise a generally tubular cable jacket 102 containing elements that may include the following: a central tube 104; optical fibers 106 (e.g., in the form of ribbons) contained within the central tube 104; and a number of semi-rigid rods 108 helically arranged around the central tube 104. The exterior or outside surface of the jacket 102 may be ridged or grooved to enhance blowing performance.

"Helically" arranged means that each rod 108 follows a substantially helical path around the central or longitudinal axis (not shown) of the cable 100. The helical arrangement of the rods 108 may help minimize cable bend radius. Nevertheless, in other embodiments (not shown) the rods may be linearly arranged around the central tube. That is, in other embodiments each rod may follow a path substantially parallel to the longitudinal axis of the cable.

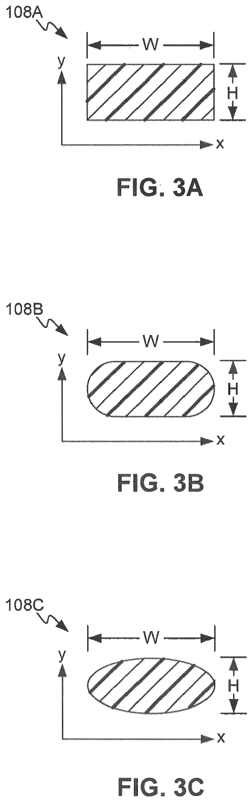

As illustrated in FIG. 3A, in an exemplary embodiment a rod 108A, which is an example of the rods 108 (FIGs. 1-2), has a rectangular cross-sectional shape, defined by a width (W) and a height (H). (A spatial reference system of x and y axes, corresponding to W and H, respectively, is also shown.) The width may be greater than the height. For example, the width (W) of the rod 108A may be at least twice the height (H) of the rod 108A. Stated another way, the aspect ratio (i.e., W:H) of the rod 108A may be at least 2:1. Aspect ratio is the ratio of the longest distance across an oblong or elongated geometric shape to the shortest distance across that shape. More preferably, the aspect ratio of the rod 108A may be about 2.5:1. The rod 108A may, for example, have a width of 1.37 mm and a height of 0.55 mm.

Referring again to FIGs. 1-2, the rods 108 may be arranged with one of the wide or long sides facing (i.e., covering a portion of) the outer surface of the central tube 104 and the opposing wide or long side facing the inner surface of the cable jacket 102. The shorter ("height") sides of the rods 108 extend in a generally radial direction with respect to the center of the cable.

Although in the embodiment illustrated in FIG. 3A each rod 108A is rectangular in cross-sectional shape, in other embodiments such rods may have other shapes with similar aspect ratios. As illustrated in FIG. 3B, in another exemplary embodiment a rod 108B, which is another example of the rods 108 (FIGs. 1-2), does not have a precisely rectangular cross-sectional shape but rather has only a substantially rectangular cross-sectional shape because the rod 108B has rounded corners. For example, due to manufacturing processes, it may not be possible to produce a rod having precisely right-angled corners. Nevertheless, in a manner similar to the above-described rod 108A (FIG. 3A), the rod 108B may have an aspect ratio (i.e., W:H) of at least 2:1 and, more preferably, about 2.5:1. The rod 108B may, for example, have a width of 1.37 mm and a height of 0.55 mm.

As illustrated in FIG. 3C, in another exemplary embodiment a rod 108C has an elliptical cross-sectional shape. Nevertheless, in a manner similar to the above-described rods 108A (FIG. 3A) and 108B (FIG. 3B), the rod 108C may have an aspect ratio (i.e., W:H) of at least 2:1 and, more preferably, about 2.5:1. The rod 108C may, for example, have a width of 1.37 mm and a height of 0.55 mm. In view of the examples described above with regard to FIGs. 3A-3C, one of ordinary skill in the art will appreciate that in still other embodiments such rods may have still other cross-sectional shapes with aspect ratios of at least 2:1.

Referring again to FIGs. 1-2, the rods 108 may be distributed substantially evenly around the circumference of the central tube 104. That is, the spacing between adjacent rods 108 (each helically positioned around the central tube 104) may be substantially constant. As understood by one of ordinary skill in the art, the spacing between rods 108 may be substantially rather than exactly constant, the paths of the rods 108 may be substantially rather than exactly helical, etc., due to flexure of the cable 100, manufacturing tolerances, etc.

The rods 108 may cover a portion of the outer surface of the central tube 104. The portion may be expressed as a predetermined amount or percentage of the surface area or circumference of the central tube 104. For example, the rods 108 may cover more than one-half the outer surface of the central tube 104. Stated another way, the sum of the widths (W) of the rods 108 may be greater than one-half the circumference of the outer surface of the central tube 104. More preferably, the rods 108 may cover more than 60 percent of the outer surface of the central tube 104. That is, the sum of the widths of the rods 108 may be greater than 60 percent of the circumference of the outer surface of the central tube 104. This may also be expressed as an equation:

$$nW/\pi D > .6, \text{ where n is the number of rods 108, D is the outside diameter}$$

where n is the number of rods 108, D is the outside diameter of the central tube 104, and W is above-referenced width of each rod 108.

The number (n) of rods 108 may be selected based upon various factors, such as the outside diameter (OD) of the cable 100, the number of optical fibers 106, etc. In an exemplary embodiment, the cable 100 may have an OD in a range of 7-18 millimeters (mm). The cable 100, having an OD of 7-18 mm, may contain at least 144 optical fibers 106, each having a diameter of 200-250 microns. For example, the 7-18 mm cable 100 may have at least 144 such optical fibers 106 and 6-18 rods 108. More preferably, the 7-18 mm cable 100 may have at least 288 such optical fibers 106 and 8-18 rods 108. Nevertheless, more generally, a cable in accordance with some exemplary embodiments of the present invention may have at least six rods 108.

Each rod 108 may be made of fiber-reinforced plastic (FRP) or other material that makes the rod 108 semi-rigid. The term semi-rigid means that the rod 108 is compressively rigid or stiff yet sufficiently flexible to follow the helical path described above. As understood by one of ordinary skill in the art, FRP is a thermoset composite, commonly consisting of about 80 percent by weight of glass fiber and 20 percent by weight of a thermoset polymer. The glass fiber may be, for example, a type commonly known as E-glass (electrically insulating glass), and the thermoset polymer may be, for example, epoxy, urethane acrylate, etc.

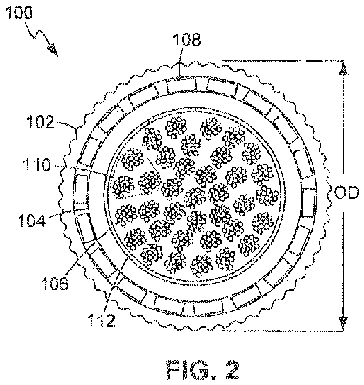

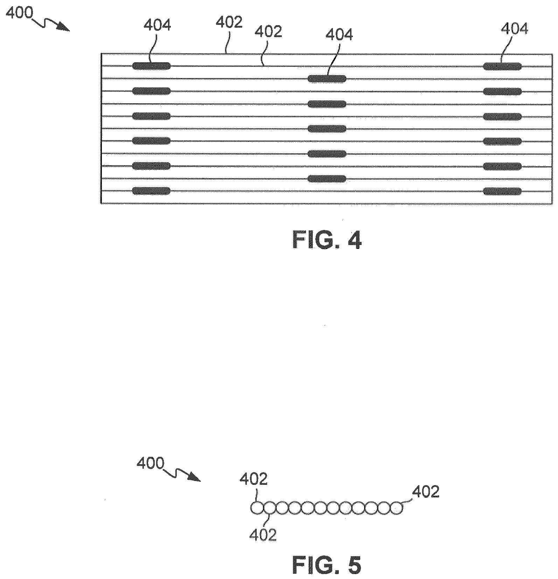

As illustrated in FIG. 4, the above-described optical fibers (e.g., the plurality of optical fibers 106 in FIGs. 1-2) may be in the form of one or more so-called "rollable" or "partially bonded" optical fiber ribbons 400. Rollable optical fiber ribbon 400 comprises a plurality of optical fibers 402 joined to each other intermittently along their lengths with patches of adhesive, commonly referred to as a matrix material 404. As well understood by one of ordinary skill in the art, although rollable optical fiber ribbon 400 has the generally flat or ribbon shape shown in FIGs. 4-5 when laid flat (i.e., in a plane) with its optical fibers 402 arrayed parallel to each other, the intermittent (rather than continuous) distribution of matrix material 404 leaves the optical fibers 402 sufficiently free or unconstrained that they can roll into or otherwise assume a compact bundle or roughly cylindrical shape, such as the shape shown in cross section in FIG. 2. With the rollable optical fiber ribbon 400 assuming the compact cylindrical shape, a large number of optical fibers 402 may occupy a relatively small cross-sectional area, thus enabling cables (not shown in FIGs. 4-5) having high fiber packing densities. Yet, with the rollable optical fiber ribbon 400 assuming the flat or ribbon shape shown in FIGs. 4-5, mass-fusion splicing techniques may be conveniently applied to the rollable optical fiber ribbon 400.

The pattern of matrix material 404 shown in FIG. 4 or other characteristics of the rollable optical fiber ribbon 400 described herein are intended only as examples, and one of ordinary skill in the art will recognize that other types of rollable optical fiber ribbon are suitable. A common characteristic possessed by all such rollable optical fiber ribbons is that the intermittent (rather than continuous) distribution of matrix material 404 provides the ribbon with sufficient flexibility to enable it to be rolled into the above-described bundle shape or cylindrical shape and yet return to a ribbon shape when laid flat. The term "rollable" is understood by one of ordinary skill in the art in the context of optical fiber ribbons to specifically refer to a ribbon having this characteristic, provided by the intermittent rather than continuous distribution of matrix material 404. A "rollable" ribbon may be contrasted with what is commonly referred to in the art as a "flat" or "encapsulated" ribbon, in which matrix material is distributed continuously along the length of the fibers. In a flat ribbon, the fibers may be fully encapsulated within the matrix material. The rigidity of encapsulated optical fiber ribbons presents challenges to achieving high fiber packing density in cables. As described above, the rollable ribbon structure overcomes this problem while enabling mass-fusion splicing. For convenience, the term "rollable ribbon" is defined herein to mean a plurality of optical fibers joined to each other with matrix material intermittently along their lengths.

In some examples of the above-described cable 100 (FIGs. 1-2), the plurality of optical fibers 106 may be in the form of at least 12 rollable ribbons, each having 12 optical fibers 106. In other examples of the cable 100, the plurality of optical fibers 106 may be in the form of at least 24 rollable ribbons, each having 12 optical fibers 106. Nevertheless, in still other embodiments (not shown), the optical fibers may be loose, i.e., non-ribbonized. In such embodiments the optical fibers may be bundled by threads. The exemplary cable 100 may include threads 110 around bundles of multiple rollable ribbons (only a single exemplary thread 110 is shown in FIG. 2 for clarity). In yet other embodiments, the optical fibers may be in the form of flat, i.e., encapsulated, ribbons. Additional features, such as a layer of water-blocking tape 112 (FIGs. 1-2) between the central tube 104 and the optical fibers 106, may also be included.

The reason why the rods 108 have a high aspect ratio (e.g., rectangular) cross-sectional shape and do not have a circular or other 1:1 aspect ratio cross-sectional shape relates to achieving a desirable balance of stiffness of the overall cable 100 in relation to the OD of the cable 100. Stated another way, the rationale for employing rods having high aspect ratio cross-sectional shapes rather than rods having lower aspect ratio (e.g., circular) cross-sectional shapes is to reduce the cable OD while maintaining (or exceeding) the same level of stiffness as other rod shapes on a per-rod basis. As the rods 108 contribute far more (about 90-95 percent) of the stiffness of the overall cable 100 than other elements of the cable 100 (e.g., the fibers 106, the central tube 104, etc.), the stiffness of the rods 108 can be the focus of the comparative (i.e., rectangular versus circular) calculations below. The area moment of inertia directly corresponds to the rod stiffness, and the following equations enable a comparison between circular and rectangular rod cross-sections:

Circle: $I_x = I_y = \dfrac{\pi D^4}{64}$ , where $D$ is the rod diameter

Rectangle: $I_x = \dfrac{b h^3}{12}$ and : $I_y = \dfrac{h b^3}{12}$ , where $b$ is the rod base (i.e., width) and $h$ is the rod height

For the rectangular rod 108 (FIGs. 1-2) where $h < b$, the lowest area moment of inertia and therefore lowest rigidity would be about its x-axis (i.e. $I_x$) and is discussed further. To achieve the equivalent inertias, the diameter of a circular rod (not shown in the drawing figures) would require the following calculation.

$$I_{\text{circle}} = I_{\text{x.rectangle}} = \frac{\pi D^4}{64} = \frac{b h^3}{12} \rightarrow D = \sqrt[4]{\frac{16 b h^3}{3\pi}}$$

Take the example of a 1.37 x 0.55 mm rectangular FRP rod, which is a common size available commercially. Inputting these dimensions into the above equation yields a circular rod diameter of 0.79 mm. To achieve the same level of stiffness of the rectangular rod, a circular rod would contribute an additional 0.48 mm to the overall cable diameter (OD), i.e., the difference between the rectangle's height and the rod diameter multiplied by two due to approximately even dispersion around the central tube. This is under the assumption that (a) the thickness of the cable jacket is fixed (i.e. same dimensions) and (b) the number of rods is also fixed due to equipment constraints (i.e. same rigidity).

The basis of the foregoing comparison between rectangular and circular rods can be extended to other rods having similar aspect ratios. In accordance with the inventive concepts disclosed herein, central core cables (e.g., intended for blowing installations, where space is at a premium and cable stiffness is an important consideration) are provided with rods having an aspect ratio of at least 2:1 rather than circular or other lower aspect ratio rods.

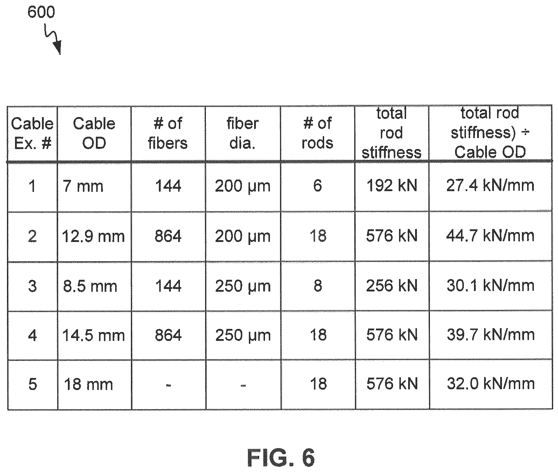

In FIG. 6 a table 600 provides some examples of optical fiber cables in accordance with exemplary embodiments of the invention. In the following examples, the stiffness of each rod may be calculated using the above-described example of the rod 108 having dimensions of 1.37 mm by 0.55 mm and made of a composite material comprising 80 percent by weight of E-glass and 20 percent by weight thermoset polymer. Nevertheless, it should be noted that the resulting stiffness (in units of kilonewtons or "kN") is a material property that would be the same for rods of other dimensions. A calculation (not shown) using these properties of the exemplary rod 108 yields a minimum rod stiffness of approximately 32kN (or 320 N per 1 percent linear strain).

In a first example (Cable Ex. #1 in the table 600), a cable may have an OD of 7 mm and consist of 144 fibers, each having a diameter of 200 $\mu$m. Using the above-described exemplary characteristic of the rods 108 covering more than one-half the outer surface of the central tube 104, it can be calculated that the number of rods in such a cable would be 6. It can also be calculated that, as each of the 6 rods in this example may have a stiffness of 32 kN, all six rods together or in total would have a total rod stiffness of 192 kN. Dividing this "total rod stiffness" of 192 kN by the cable OD of 7 mm yields a ratio of total rod stiffness to cable OD of 27.4 kN/mm in this first example of a cable.

In a second example (Cable Ex. #2 in the table 600), a cable may have an OD of 12.9 mm and consist of 864 fibers, each having a diameter of 200 $\mu$m. Using the above-described exemplary characteristic of the rods 108 covering more than one-half the outer surface of the central tube 104, it can be calculated that the number of rods in such a cable would be at least 18. It can also be calculated that, as each of the 18 rods in this example may have a stiffness of 32 kN, all 18 rods together or in total would have a total rod stiffness of 576 kN. Dividing the total rod stiffness of 576 kN by the cable OD of 12.9 mm yields a ratio of total rod stiffness to cable OD of 44.7 kN/mm in this second example of a cable.

In a third example (Cable Ex. #3 in the table 600), a cable may have an OD of 8.5 mm and consist of 144 fibers, each having a diameter of 250 $\mu$m. Using the above-described exemplary characteristic of the rods 108 covering more than one-half the outer surface of the central tube 104, it can be calculated that the number of rods in such a cable would be 8. It can also be calculated that, as each of the 8 rods in this example may have a stiffness of 32 kN, all 8 rods together or in total would have a total rod stiffness of 256 kN. Dividing the total rod stiffness of 256 kN by the cable OD of 8.5 mm yields a ratio of total rod stiffness to cable OD of 30.1 kN/mm in this third example of a cable.

In a fourth example (Cable Ex. #4 in the table 600), a cable may have an OD of 14.5 mm and consist of 864 fibers, each having a diameter of 250 $\mu$m. Using the above-described exemplary characteristic of the rods 108 covering more than one-half the outer surface of the central tube 104, it can be calculated that the number of rods in such a cable would be at least 18. It can also be calculated that, as each of the 18 rods in this example may have a stiffness of 32 kN, all 18 rods together or in total would have a total rod stiffness of 576 kN. Dividing the total rod stiffness of 576 kN by the cable OD of 14.5 mm yields a ratio of total rod stiffness to cable OD of 39.7 kN/mm in this fourth example of a cable.

In a fifth example (Cable Ex. #5 in the table 600), a cable may have an OD of 18 mm and have 18 rods. In this example, there may be any number of fibers. It should be noted that the number of fibers indicated in the first through fourth examples are intended only as examples, and similar cables may have other numbers of fibers. As each of the 18 rods in this example may have a stiffness of 32 kN, all 18 rods together or in total would have a total rod stiffness of 576 kN. Dividing the total rod stiffness of 576 kN by the cable OD of 18.0 mm yields a ratio of total rod stiffness to cable OD of 32.0 kN/mm in this fifth example of a cable.

In the cable examples in the table 600, the ratio of total rod stiffness to cable OD ranges from 27.4 kN/mm to 44.7 kN/mm. Other cable examples will occur readily to one of ordinary skill in the art in view of the teachings and examples herein. Broadly, cables in accordance with exemplary embodiments of the invention having a ratio of total rod stiffness to cable OD in a range from 20 kN/mm to 50 kN/mm are contemplated. Preferably, such cables may have a ratio of total rod stiffness to cable OD in a range from 25 kN/mm to 45 kN/mm. Still more preferably, such cables may have a ratio of total rod stiffness to cable OD in a range from 30 kN/mm to 40 kN/mm.

One or more illustrative or exemplary embodiments of the invention have been described above. However, it is to be understood that the invention is defined by the appended claims and is not limited to the specific embodiments described.

## Claims

1. An optical fiber cable, comprising:

    a cable jacket;
    a central tube within the cable jacket;
    a plurality of optical fibers within the central tube; and
    a plurality of semi-rigid rods around the central tube and within the cable jacket, each rod having a cross-sectional shape with an aspect ratio of at least 2:1.

2. The optical fiber cable of claim 1, wherein each rod has a substantially rectangular cross-sectional shape.

3. The optical fiber cable of claim 1 or 2, wherein the plurality of semi-rigid rods are helically arranged around the central tube.

4. The optical fiber cable of one of claims 1 to 3, wherein each semi-rigid rod comprises a fiber-reinforced plastic material.

5. The optical fiber cable of one of claims 1 to 4, wherein a sum of widths of the plurality of semi-rigid rods is greater than one-half a circumference of the central tube.

6. The optical fiber cable of one of claims 1 to 5, wherein the plurality of rods comprises at least six semi-rigid rods distributed evenly around the central tube.

7. The optical fiber cable of one of claims 1 to 6, wherein the plurality of optical fibers comprises at least 144 optical fibers.

8. The optical fiber cable of one of claims 1 to 7, wherein the plurality of optical fibers are in rollable ribbon form.

9. The optical fiber cable of claim 8, comprising at least 12 rollable ribbons, each rollable ribbon comprising at least 12 optical fibers.

10. The optical fiber cable of one of claims 1 to 9, wherein the cable jacket has an outside diameter between 7 and 18 millimeters.

11. The optical fiber cable of claim 10, wherein a ratio of total rod stiffness to cable jacket outside diameter is in a range from 20 kN/mm to 50 kN/mm.

12. The optical fiber cable of claim 11, wherein the ratio of total rod stiffness to cable jacket outside diameter is in a range from 30 kN/mm to 40 kN/mm

13. The optical fiber cable of one of claims 1 to 12, wherein the cable jacket has a ridged exterior surface.

14. The optical fiber cable of one of claims 1 to 13, further comprising water-blocking tape between an interior surface of the central tube and the plurality of optical fibers.

FIG. 1

FIG. 2

108A

W

y

H

x

FIG. 3A

108B

W

y

H

x

FIG. 3B

108C

W

y

H

x

FIG. 3C

400

404    402    402    404    404

FIG. 4

400

402    402

402

FIG. 5

600

| Cable Ex. # | Cable OD | # of fibers | fiber dia. | # of rods | total rod stiffness | total rod stiffness) ÷ Cable OD |
|---|---|---|---|---|---|---|
| 1 | 7 mm | 144 | 200 µm | 6 | 192 kN | 27.4 kN/mm |
| 2 | 12.9 mm | 864 | 200 µm | 18 | 576 kN | 44.7 kN/mm |
| 3 | 8.5 mm | 144 | 250 µm | 8 | 256 kN | 30.1 kN/mm |
| 4 | 14.5 mm | 864 | 250 µm | 18 | 576 kN | 39.7 kN/mm |
| 5 | 18 mm | - | - | 18 | 576 kN | 32.0 kN/mm |

# FIG. 6

Europäisches
Patentamt

European
Patent Office

Office européen
des brevets

# EUROPEAN SEARCH REPORT

Application Number

EP 21 20 8795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 462 960 A (YANGTZE OPTICAL FIBRE & CABLE JOINT STOCK LTD CO) 12 December 2017 (2017-12-12) * paragraphs [0005] – [0016] * * figure 1 * | 1-14 | INV. G02B6/44 |
| X | WO 2021/080798 A1 (OFS FITEL LLC [US]) 29 April 2021 (2021-04-29) * paragraphs [0024] – [0025] * * figure 8 * | 1-14 | |
| A | US 5 044 722 A (VOSER OTHMAR [CH]) 3 September 1991 (1991-09-03) * the whole document * | 1-14 | |
| A | WO 2020/117547 A1 (CORNING RES & DEV CORP [US]) 11 June 2020 (2020-06-11) * the whole document * | 1-14 | |
| A | US 2008/037942 A1 (TATAT OLIVIER [FR]) 14 February 2008 (2008-02-14) * the whole document * | 1-14 | TECHNICAL FIELDS SEARCHED (IPC) |
| A | US 2003/165309 A1 (MOON SEUNG-HYUN [KR] ET AL) 4 September 2003 (2003-09-04) * the whole document * | 1-14 | G02B |

The present search report has been drawn up for all claims

| Place of search | Date of completion of the search | Examiner |
|---|---|---|
| The Hague | 26 April 2022 | Hohmann, Leander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 8795

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2022

| Patent document cited in search report | | Publication date | Patent family member(s) | | Publication date |
|---|---|---|---|---|---|
| CN 107462960 | A | 12-12-2017 | NONE | | |
| WO 2021080798 | A1 | 29-04-2021 | NONE | | |
| US 5044722 | A | 03-09-1991 | AT | 93068 T | 15-08-1993 |
| | | | EP | 0407502 A1 | 16-01-1991 |
| | | | ES | 2019055 A4 | 01-06-1991 |
| | | | JP | H03502497 A | 06-06-1991 |
| | | | US | 5044722 A | 03-09-1991 |
| | | | WO | 9006530 A1 | 14-06-1990 |
| WO 2020117547 | A1 | 11-06-2020 | AU | 2019394773 A1 | 24-06-2021 |
| | | | CA | 3122088 A1 | 11-06-2020 |
| | | | CN | 113366357 A | 07-09-2021 |
| | | | EP | 3891543 A1 | 13-10-2021 |
| | | | US | 2021389537 A1 | 16-12-2021 |
| | | | WO | 2020117547 A1 | 11-06-2020 |
| US 2008037942 | A1 | 14-02-2008 | AT | 518160 T | 15-08-2011 |
| | | | EP | 1887396 A1 | 13-02-2008 |
| | | | ES | 2370266 T3 | 14-12-2011 |
| | | | FR | 2904876 A1 | 15-02-2008 |
| | | | US | 2008037942 A1 | 14-02-2008 |
| US 2003165309 | A1 | 04-09-2003 | CN | 1442716 A | 17-09-2003 |
| | | | EP | 1343040 A2 | 10-09-2003 |
| | | | JP | 2003255205 A | 10-09-2003 |
| | | | KR | 20030072441 A | 15-09-2003 |
| | | | US | 2003165309 A1 | 04-09-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63192444